# FASCICULE DE BREVET EUROPEEN

(11) **EP 0 539 298 B1**
(45) Date de publication et mention de la délivrance du brevet: **24.07.1996**
(21) Numéro de dépôt: 92402889.7
(22) Date de dépôt: 22.10.1992
(51) Int. Cl.: G02F 1/01, G02B 6/12

(54) **Modulateur électrooptique intégré et procédé de fabrication de ce modulateur**
Integrierter elektro-optischer Modulator und dessen Herstellungsverfahren
Integrated electro-optic modulator and method of making the same

(30) Priorité: 25.10.1991 FR 9113201
(43) Date de publication de la demande: 28.04.1993
(73) Titulaire: COMMISSARIAT A L'ENERGIE ATOMIQUE, 75015 Paris (FR)
(72) Inventeur: Valette, Serge, F-38100 Grenoble (FR)
(74) Mandataire: Dubois-Chabert, Guy

(56) Documents cités:
- EP-A- 0 323 317
- WO-A-91/03748
- APPLIED PHYSICS LETTERS, vol. 58, no. 9, Mars 1991, New York US, pages 884-886; P.R. ASHLEY : "Channel waveguides in electro-optic polymers using a photopolymer cladding technique"

## Description

L'invention a pour objet un modulateur électrooptique à matériaux électrooptiques tels que des polymères organiques, destiné à l'optique intégrée ainsi que son procédé de fabrication. Elle trouve une application notamment dans le domaine du traitement des signaux radar en temps réel, par exemple dans des corrélateurs, analyseurs de spectres ou des dispositifs interferrométriques, dans le domaine des télécommunications par voie optique et dans le domaine des capteurs à fibres optiques.

On rappelle qu'une structure guide d'ondes consiste généralement en une couche tampon, une couche guidante et une couche supérieure empilées sur un substrat, la couche guidante ayant un indice de réfraction supérieur à celui des couches tampon et supérieure.

L'effet électrooptique permet de modifier, sous l'action d'un champ électrique, l'indice de réfraction d'un matériau et donc de réaliser des fonctions diverses comme la modulation de phase ou d'intensité d'un signal lumineux, ou encore le changement de polarisation de ce signal.

La modulation d'amplitude ou de phase de signaux lumineux à très haute fréquence (supérieure à 2 GHz) est indispensable pour certaines applications de communication optique.

La modulation en amplitude, en phase ou en polarisation est indispensable pour réaliser un hétérodynage des signaux lumineux à traiter et augmenter ainsi les performances des dispositifs intégrés du type capteur (gyromètre, capteur de déplacement...) ou du type mémoire optique (modulation de polarisation des têtes de lecture magnéto-optiques...). Dans ce cas, les fréquences de modulation demandées sont en général plus faibles que celles des communications optiques (quelques dizaines de MHz dans les dispositifs métrologiques et au-delà du GHz pour des applications du type gyromètre).

L'effet électro-optique du premier ordre, appelé aussi effet Pockels, est possible avec des matériaux cristallins non symétriques alors que cet effet est nul pour les matériaux amorphes.

Avec les techniques de dépôt utilisées généralement en optique intégrée, la silice, l'oxynitrure de silicium SiOₓN_{y} avec 0≤x≤2 et O≤y≤4/3 et le nitrure de silicium utilisés en optique intégrée sur silicium (OIS) sont amorphes.

Aussi, il n'est pas possible de moduler électriquement la lumière dans les structures OIS généralement utilisées. Or, ces technologies OIS prennent une importance grandissante en optoélectronique intégrée. Il y a donc un intérêt évident à savoir réaliser avec ces technologies, la plupart des composants indispensables en optique et de constituer une bibliothèque de composants la plus complète possible.

Le but de l'invention est donc de réaliser un modulateur électrooptique intégré compatible avec les structures OIS, c'est-à-dire un modulateur dont l'agencement et la nature des couches permet toujours un guidage convenable de la lumière. Pour réaliser ce modulateur, les inventeurs ont remplacé partiellement un des matériaux de la structure OIS par un matériau solide à propriétés électrooptiques tel qu'un polymère organique.

Ce remplacement doit répondre à certaines contraintes :
- ne pas pénaliser les performances totales des structures OIS par de fortes pertes aux interfaces entre la structure OIS classique et la partie destinée à l'interaction électrooptique ;
- occuper une place la plus faible possible, d'où l'intérêt de choisir des matériaux à fort coefficient électrooptique ; et
- être mis en oeuvre facilement.

La configuration générale d'un modulateur électrooptique est connue depuis longtemps. Les dispositifs utilisant ce type d'interaction mettant en jeu un polymère organique sont constitués d'une couche guidante généralement gravée en polymère électrooptique, interposée entre une couche tampon et une couche de recouvrement dont les indices de réfraction sont inférieurs à celui du polymère électrooptique. Ces couches constituent non seulement la zone active du modulateur, mais aussi toute la structure guide qui lui est associée.

De part et d'autre de cet empilement de couches, on trouve deux électrodes de dimensions réduites permettant d'assurer deux fonctions distinctes :
a) la polymérisation des molécules du polymère électrooptique, de façon à obtenir une orientation commune des dipoles du polymère et de réaliser un coefficient électrooptique le plus important possible. Cette opération se fait avant toute utilisation du modulateur, à une température supérieure à la température de transition vitreuse du polymère et par application d'un champ électrique le plus élevé et le plus uniforme possible sur le modulateur.
b) la création du champ électrique de commande du modulateur lors de son utilisation.

Ces électrodes, généralement métalliques, ne doivent pas être vues par le signal lumineux guidé afin d'éviter toute absorption indésirable de ce dernier dans les électrodes. Les épaisseurs des couches tampon et de recouvrement doivent donc être supérieures à celles de la pénétration des ondes évanescentes dans ces couches.

Des exemples de modulateurs électrooptiques à polymères organiques sont décrits par exemple dans l'article de G.R. MÖHLMANN, ECOC 90-833 "polymer electrooptic devices" et dans l'article de H. HAGA et al "waveguide électro-optic modulator using poled polymer film", p. 16.

Les polymères organiques utilisés dans les modulateurs électrooptiques sont la plupart du temps déposés à la tournette après mélange dans un solvant adéquate.

Bien qu'il soit possible de graver ces polymères par voie sèche, la technologie de gravure associée à ces matériaux est encore balbutiante ; l'invention permet en particulier l'utilisation de tels matériaux en évitant leur gravure au voisinage de la zone de modulation.

Par ailleurs, ces matériaux ont des pertes optiques relativement élevées (0,2 à 0,5 dB/cm) comparées à celles des structures OIS (0,02 à 0,03 dB/cm). D'où l'intérêt de n'utiliser que localement ces matériaux dans les structures OIS.

Aussi, l'invention a pour objet un modulateur électrooptique intégré sur un substrat comportant :
a) une structure guide supportée par le substrat, comprenant une couche guidante pour former un microguide apte à véhiculer des faisceaux lumineux, interposée entre une couche inférieure et une couche supérieure d'indices de réfraction inférieurs à celui de la couche guidante, la couche guidante et/ou la couche supérieure étant gravée pour le confinement latéral des faisceaux lumineux dans le microguide,
b) une cavité pratiquée sur tout ou partie de l'épaisseur au moins de la couche supérieure et sur une partie seulement de la longueur de la structure guide,
c) un matériau solide actif dont on peut modifier électriquement l'indice de réfraction, remplissant ladite cavité et capable de véhiculer lesdits faisceaux lumineux,
d) une couche de confinement recouvrant le matériau actif ainsi que la structure guide, les indices de réfraction respectivement de la couche supérieure et de la couche de confinement étant inférieurs à celui du matériau actif,
e) deux électrodes placées de part et d'autre du matériau actif pour modifier son indice, une électrode inférieure située au-dessus de la couche inférieure du côté du substrat et une électrode supérieure disposée sur la face externe de la couche de confinement.

Le matériau actif à propriétés électrooptiques utilisable dans l'invention est en particulier un polymère organique tel qu'un de ceux cités dans les articles de G.R. MÖHLMANN et de H. HAGA cités précédemment ou un matériau tel que ZnO ou CdS (déposés par pulvérisation cathodique).

Ces matériaux électrooptiques peuvent être intégrés sur un substrat en silicium. Ils sont compatibles avec les structures OIS.

Aussi, de façon avantageuse, la couche supérieure et la couche inférieure sont en silice et la couche guidante est en nitrure de silicium, en alumine, en oxynitrure de silicium SiOₓN_{y} avec 0≤x≤2 et 0≤x≤4/3 ou en silice.

La couche supérieure en silice, la couche inférieure en silice et la couche guidante lorsqu'elle est en silice sont non intentionnellement dopées ou dopées avec des dopants diminuant ou augmentant leur indice de réfraction de façon à ce que les couches supérieure et inférieure présentent un indice de réfraction inférieur à celui de la couche guidante.

La diminution de l'indice de réfraction de la silice peut être obtenue par un dopage au fluor et/ou au bore et l'augmentation de l'indice de réfraction de la silice peut être obtenue par un dopage au phosphore, germanium, titane ou azote.

Bien que l'invention s'applique plus particulièrement à la technologie OIS, elle peut aussi s'appliquer aux technologies sur substrat en matériau III-V (GaAs ou InP par exemple) et de façon plus générale aux structures guides en matériaux inorganiques, à l'exception de la zone occupée par le matériau actif électrooptiquement.

L'électrode inférieure peut être disposée directement sur la face de la couche inférieure côté substrat ou même sur la face arrière du substrat, à condition que ce dernier soit conducteur. Pour qu'un substrat en silicium soit conducteur, ce dernier doit être dopé n⁺ ou p⁺. Ce dernier agencement pourra être utilisé lorsqu'il y aura, au cours de la fabrication du modulateur, une ou plusieurs étapes à température élevée (recuit ou fluage) que ne supporterait pas l'électrode inférieure, celle-ci pouvant alors être réalisée après ces étapes hautes températures.

En revanche, cette dernière solution est pénalisante du point de vue des vitesses de modulation accessibles du fait des valeurs plus importantes de la résistance et de la capacité électriques du modulateur.

Aussi, il est préférable de disposer l'électrode inférieure sur la face de la couche inférieure côté substrat et d'interposer entre l'électrode inférieure et le substrat, lorsque celui-ci est un diélectrique médiocre, une couche tampon. Cette couche tampon a préférentiellement un indice de réfraction inférieur ou égal à celui de la couche inférieure de la structure guide.

La zone de modulation est réalisée de façon que le profil du mode guidé mis en jeu dans la structure soit le plus proche possible de celui obtenu dans la structure guide.

De préférence, la cavité est pratiquée sur toute l'épaisseur de la couche supérieure et sur une partie au moins de la couche guidante.

L'invention a aussi pour objet un procédé de fabrication d'un modulateur tel que défini précédemment. Ce procédé comprend les étapes suivantes :
A) réalisation de l'électrode inférieure au-dessous de la couche inférieure côté substrat,
B) dépôts successifs de la couche inférieure, de la couche guidante et de la couche supérieure,
C) gravure de la couche guidante et/ou de la couche supérieure pour former au moins le microguide,
D) gravure de la couche supérieure pour former au moins en partie la cavité,
E) dépôts successifs du matériau actif et de la couche de confinement sur l'ensemble de la structure obtenue en D,
F) réalisation de l'électrode supérieure en face de la cavité.

Le microguide peut être formé soit par gravure de la couche guidante soit par gravure de la couche supérieure soit par les deux. Lorsqu'il est défini uniquement dans la couche guidante, on effectue la gravure de la couche guidante avant d'effectuer le dépôt de la couche supérieure.

Dans ce procédé, le confinement latéral de la lumière est réalisé sans avoir à modifier la couche de matériau actif après son dépôt. En particulier, cette dernière n'a pas besoin d'être gravée pour assurer le confinement latéral dans la zone de modulation, contrairement à l'art antérieur.

Le modulateur de l'invention permet d'associer , avec un minimum de perte, les parties passives constituées par la structure guide et les parties actives constituées par la cavité remplie de matériau électrooptique. A cet effet, des transitions adiabatiques sont avantageusement prévues entre la structure guide et la zone active du modulateur. Autrement dit, la couche guidante qui est ou non gravée dans la structure guide présente en regard de la cavité des extrémités gravées. Ces extrémités ont une largeur qui diminue progressivement sur une épaisseur donnée (égale ou inférieure à l'épaisseur de la couche guidante), ces dernières ayant la forme, en vue de dessus, d'un cône.

Les électrodes inférieure et supérieure sont réalisées en métal, par exemple en aluminium ou en or.

Dans le cas où les modulateurs de l'invention doivent fonctionner à très haute vitesse et où des étapes à haute température pour la fabrication de ces modulateurs s'avèrent nécessaires, l'électrode inférieure peut être réalisée en siliciure d'un métal réfractaire et en particulier en siliciure de tungstène, de cobalt, de molybdène, bien connu en microélectronique et capable de supporter les procédés haute température.

La couche de confinement est avantageusement réalisée en un polymère tel que le polyméthacrylate de méthyle (PMMA) ou les polyimides d'indice de réfraction allant de 1,45 à 1,7.

D'autres caractéristiques et avantages de l'invention ressortiront mieux de la description qui va suivre, donnée à titre illustratif et non limitatif, en référence aux dessins annexés, sur lesquels :
- la figure 1 représente schématiquement, en coupe longitudinale, un premier mode de réalisation d'un modulateur électrooptique conforme à l'invention ;
- la figure 2 représente schématiquement une vue de dessus du modulateur de la figure 1 ;
- la figure 3 représente schématiquement, en coupe longitudinale, un second mode de réalisation d'un modulateur conforme à l'invention ;
- la figure 4 est une vue de dessus du modulateur de la figure 3, la partie A de la figure 5 étant relative à une variante de mise en oeuvre ;
- les figures 5 à 8 illustrent schématiquement en coupe transversale, les différentes étapes de fabrication du modulateur de la figure 3, la partie A de la figure 5 étant relative à une variante de mise en oeuvre ;
- les figures 9 à 14 illustrent schématiquement les différentes étapes de fabrication d'un troisième mode de réalisation d'un modulateur électrooptique conforme à l'invention :

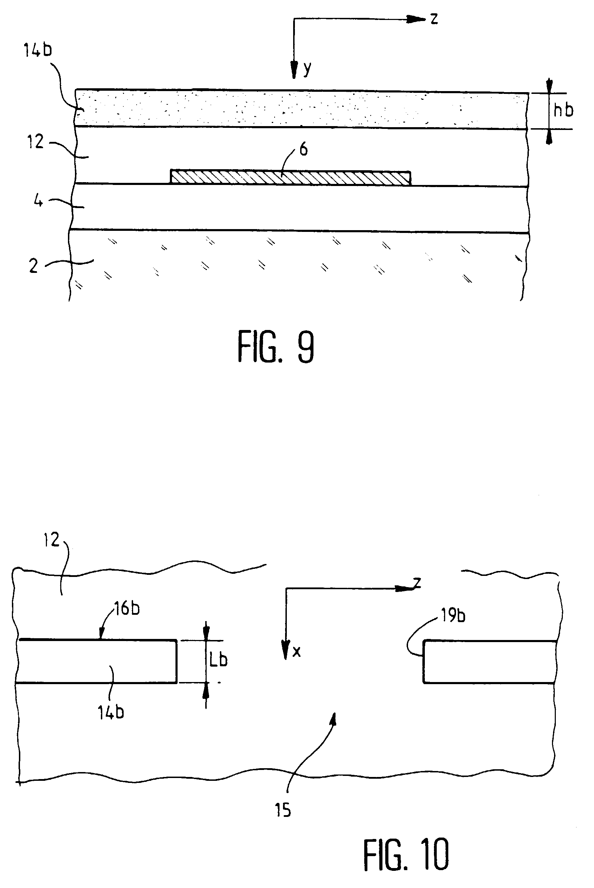

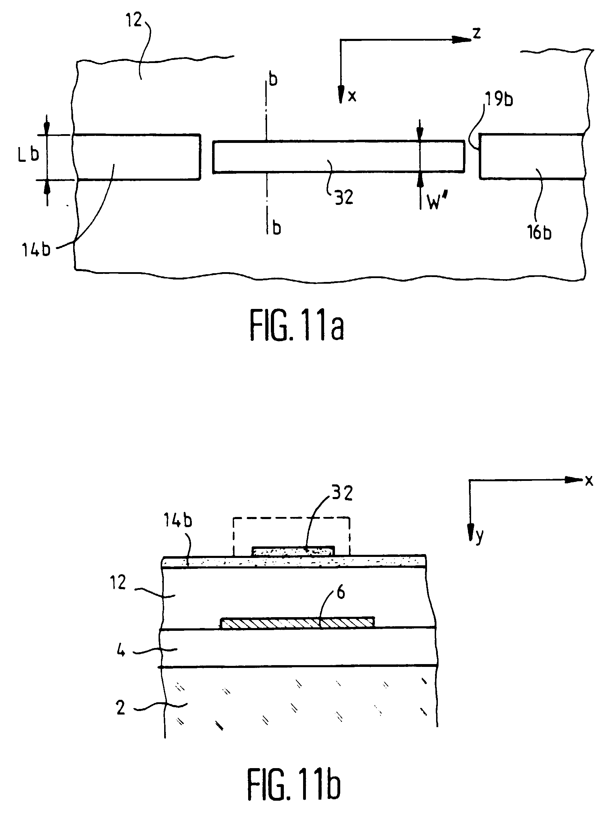

les figures 9, 12a et 13 sont des vues en coupe longitudinale, les figures 10 et 11a sont des vues de dessus et les figures 11b, 12b et 14 sont des vues en coupe transversale.

Dans la suite de la description, la structure guide Si/SiO₂/Si₃N₄/SiO₂ sera appelée structure OIS1, la structure guide Si/SiO₂/SiO₂ haut indice/SiO₂ sera appelée structure OIS2 et la structure Si/SiO₂/Si₃N₄/SiO₂ haut indice/SiO₂ sera appelée structure OIS3. Par ailleurs, on prendra à titre d'exemple un polymère organique comme matériau actif.

De plus, les indices de réfraction seront donnés pour une longueur d'onde d'utilisation de 800 nm.

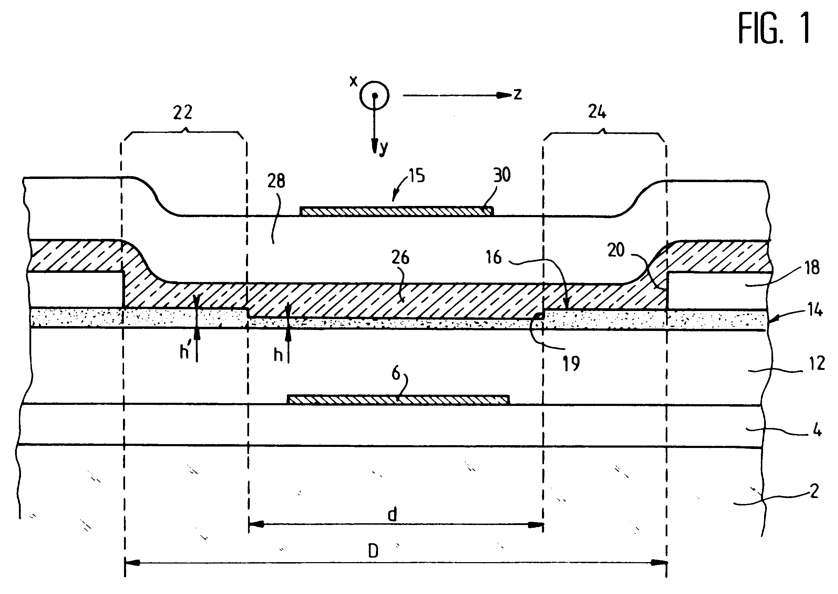

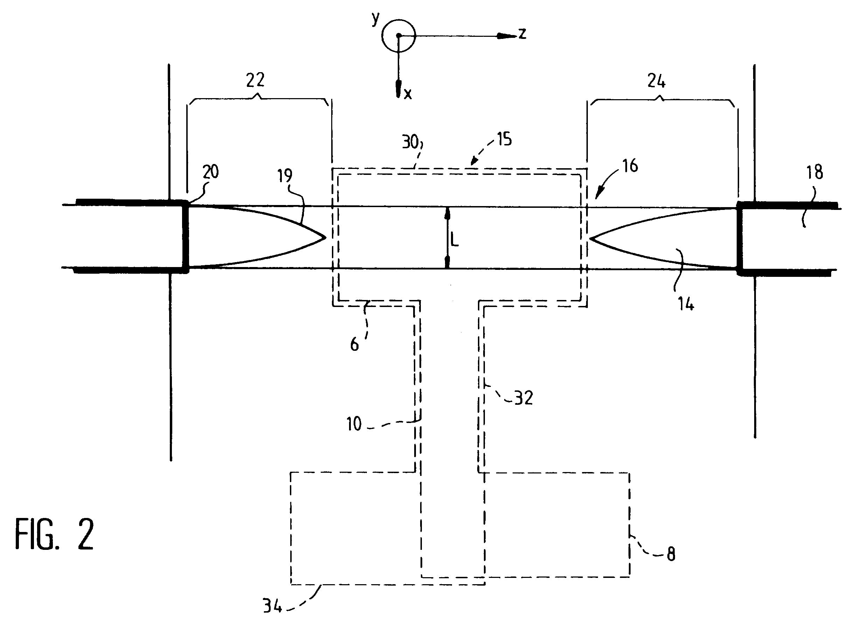

Le modulateur de l'invention représenté sur les figures 1 et 2 utilise avantageusement une structure OIS1. Aussi, ce modulateur comporte un substrat 2 en silicium monocristallin recouvert d'une couche 4 de silice non intentionnellement dopée de 0 à 3 micromètres d'épaisseur obtenue par oxydation thermique (entre 1000 et 1100°C à pression atmosphérique ou vers 700-800° sous haute pression (HIPOX)) du substrat ou par dépôt chimique en phase vapeur (CVD). La silice non dopée a un indice de réfraction de 1,45. Sur cette couche de SiO₂ 4 repose une électrode inférieure 6 en métal ou en siliciure d'un métal réfractaire de 50 à 500 nm d'épaisseur. Cette couche 4 permet d'isoler l'électrode du substrat.

Cette électrode inférieure 6 présente dans le plan xz des couches une forme rectangulaire. Une zone de contact électrique 8 (voir figure 2) connectée par une bande conductrice 10 à l'électrode 6 permet l'application d'un potentiel sur cette électrode.

En pratique, l'électrode 6, son contact électrique 8 et sa connexion 10 sont réalisés dans une même couche déposée sur la silice 4 puis gravés par les procédés classiques de photolithographie selon le motif voulu.

La couche conductrice inférieure 6-8-10 est recouverte d'une couche de confinement inférieure 12 en SiO₂ non intentionnellement dopée de 2 à 15 micromètres d'épaisseur obtenue par dépôt chimique en phase vapeur, éventuellement assisté par plasma (PECVD) ; l'épaisseur de cette couche 12 est suffisante pour isoler la lumière, guidée dans la structure, de l'électrode inférieure 6.

Sur la couche de confinement inférieure 12, on trouve une couche guidante en nitrure de silicium, définissant un microguide 16 parallèle à la direction z (direction longitudinale). Ce microguide est destiné à véhiculer les faisceaux lumineux dans la structure guide. Le dépôt de la couche guidante est réalisé par CVD et généralement par dépôt chimique en phase vapeur basse pression (LPCVD).

La couche guidante pourrait être aussi réalisée en oxynitrure de silicium SiOₓN_{y} avec 0≤x≤2 et 0≤y≤4/3 ou en alumine.

L'indice de réfraction de SiOₓN_{y} varie de 1,46 à 2 selon les valeurs de x et y ; l'indice de Si₃N₄ est voisin de 2 et l'indice de l'alumine vaut environ 1,65.

Conformément à l'invention, le microguide 16 comporte dans et à proximité de la zone de modulation 15, (la zone de modulation étant définie par la zone en regard de l'électrode inférieure 6), un motif gravé latéralement selon l'axe Z sur une largeur L allant de 2 à 8 µm et une longueur D. Ce motif présente par ailleurs dans la zone de modulation un évidement 19 longitudinal dont l'axe de symétrie est confondu avec celui du microguide. Ainsi, le microguide 16 a une épaisseur h dans la zone 15 de modulation et en dehors de la zone de modulation une épaisseur h′ avec h<h′.

La gravure latérale du motif et sa différence d'épaisseur sont obtenues par au moins deux gravures par voie sèche du microguide 16 en utilisant des masques photolithographiques définissant le motif voulu.

L'épaisseur h est telle que le confinement latéral dans le modulateur du mode guidé est assuré pour la largeur L choisie ; cette dernière dépend de la différence d'indice entre la couche guidante 14 et les couches adjacentes ainsi que de la longueur d'onde utilisée et du nombre de modes guidés que l'on veut véhiculer (cette structure guide pouvant être par exemple monomode à la fois suivant la direction x parallèle au plan des couches (direction transversale) et la direction y perpendiculaire au plan des couches).

Pour une couche guidante 14 en Si₃N₄ et une structure monomode, h est choisi par exemple entre 10 et 50 nm et h′ entre 60 et 250 nm pour les valeurs de L données précédemment et un matériau électrooptique d'indice de réfraction de 1,55.

Le modulateur électrooptique comporte en outre une couche supérieure de confinement 18 réalisée en silice non intentionnellement dopée, déposée par CVD. Cette couche 18 a une épaisseur de 1 à 10 micromètres. Elle assure le confinement latéral de la lumière dans la couche guide 14, par gravure latérale de cette couche 18 sur une largeur voisine de L et de même axe que le motif gravé de la couche 14.

Conformément à l'invention, cette couche de confinement 18 comporte une cavité 20 réalisée par gravure de la couche 18 notamment par voie sèche en même temps que sa gravure latérale et sur toute l'épaisseur de la couche 18. Cette cavité 20 est située en regard de la zone de modulation 15 et notamment de l'évidement 19. Elle définit ainsi, une seule et même cavité avec l'évidement 19, limitée dans les deux directions x et z (figure 2) parallèles aux couches. La cavité 20 présente une largeur D supérieure à la largeur minimum d de l'évidement 19.

Conformément à l'invention, les bords de l'évidement 19 du microguide (figure 2) présentent, en vue de dessus, la forme d'un cône d'épaisseur h′-h.

Ainsi, selon l'invention, les zones 22 et 24 séparant les bords de l'évidement 19 des bords de la cavité 20 définissent deux transitions adiabatiques. Ces transitions adiabatiques permettent un passage sans perte optique entre la structure guide OIS1 et la structure active (polymère organique électrooptique).

Les deux zones de transitions adiabatiques 22 et 24 peuvent être réalisées comme décrites dans le document Appl. Phys. Lett. 55 (23) du 4 décembre 1989 p. 2389-2391 de Y. Shani et al. "Efficient coupling of a semiconductor laser to an optical fiber by means of a tapered waveguide on silicon".

On trouve ensuite une couche 26 de polymère organique solide à propriétés électrooptiques, recouvrant l'ensemble de la structure sous-jacente ; l'utilisation d'une cavité permet d'éviter la gravure de ce polymère, généralement délicate à réaliser en particulier dans la zone de modulation, pour le confinement latéral de la lumière dans la zone de modulation. Cette couche de polymère 26 est déposée à la tournette après mélange dans un solvant adéquat, puis séché à l'air libre. La couche 26 active a une épaisseur de 0,2 à 5 micromètres.

Cette couche de polymère active 26 est recouverte sur toute sa surface d'une couche 28 de confinement en polymère organique en général non actif, déposée aussi à la tournette, puis séchée. Cette couche 28 de polymère a une épaisseur de 1 à 10 micromètres. Cette couche de confinement 28 est avantageusement non gravée comme la couche active 26, dans la zone de modulation.

Les polymères organiques présentent des indices de réfraction allant de 1,46 à 1,7 et ne résistent pas à des températures généralement supérieures à 150°C.

Afin d'assurer le guidage de la lumière dans le polymère actif 26, ce dernier doit présenter un indice de réfraction supérieur à celui de la couche de polymère de confinement 28, de la couche supérieure de silice 18 et de la couche inférieure de silice 12.

En particulier, le polymère actif est du PMMA dopé par de la 2-méthyl-4-nitroaniline (MNA). Ce polymère présente un indice de 1,55. La couche de confinement 28, quant à elle, est réalisée en PMMA non dopé d'indice 1,50.

On trouve enfin sur la couche polymérique 28 une électrode supérieure 30 disposée parallèlement à l'électrode inférieure 6 et en regard de cette dernière.

L'électrode 30 présente en vue de dessus la forme d'un rectangle et est reliée via une bande conductrice 32 à un zone de contact électrique 34.

L'électrode 30, la bande conductrice 32 et la zone de contact 34 sont réalisées dans une même couche conductrice, en métal ou en silicure de métal réfractaire, gravée, selon le motif voulu, par photolithographie.

Afin d'assurer la prise de contact sur l'électrode inférieure 6, il est nécessaire de réaliser un trou de contact dans l'empilement des couches 28, 26, 18 et 12 présentant une surface relativement importante de 1000 micromètres carrés ou plus, en regard de la zone de contact électrique 8. L'ouverture de ce trou de contact ne constitue pas une opération critique.

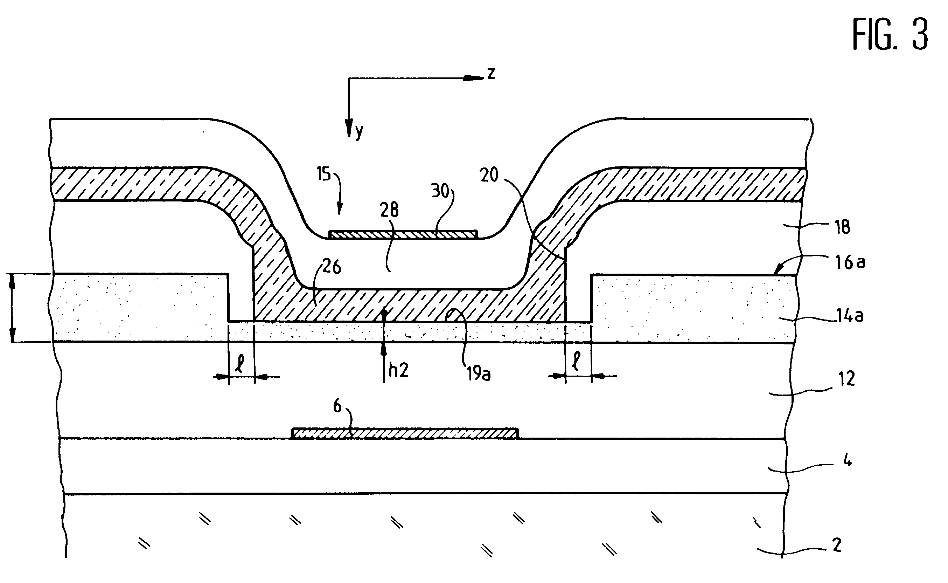

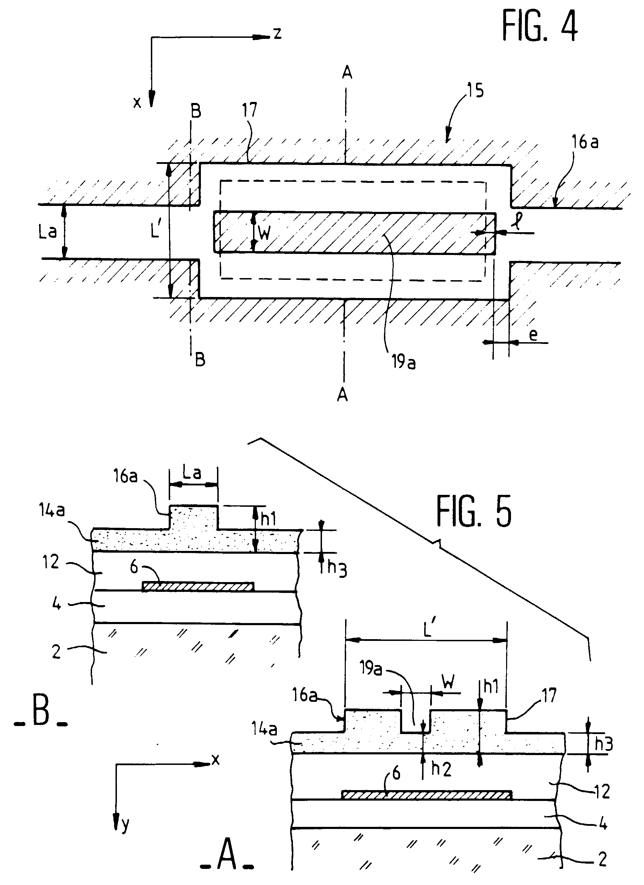

En référence aux figures 3 et 4, on décrit ci-après un second mode de réalisation du modulateur électrooptique conformément à l'invention et en référence aux figures 5 à 8 son procédé de fabrication, selon deux variantes. La structure de base est avantageusement une structure OIS2.

Les couches et éléments du modulateur sur les figures 3 à 8 identiques à ceux des figures 1 et 2 porteront la même référence.

Le modulateur représenté sur les figures 3 et 4 comportent, sur le substrat 2, la couche de silice thermique 4, l'électrode inférieure 6 connectée bien entendu à sa zone de contact (non représentée) et la couche de confinement 12 en silice non intentionnellement dopée ou éventuellement dopée avec un dopant diminuant (F, B) ou augmentant (P, Ge Ti par exemple) son indice de réfraction. Ces couches et électrode sont fabriquées comme précédemment.

La couche de confinement inférieure 12 est recouverte d'une couche guidante 14a en silice éventuellement dopée avec un dopant augmentant ou diminuant son indice de réfraction.

Cette couche guidante 14a est déposée par CVD selon une épaisseur h1 puis gravée (figure 4) pour définir le microguide 16a parallèle à la direction z.

L'électrode inférieure 6 a en général une taille voisine de celle de l'électrode supérieure 30. Cependant, le champ électrique devant être uniforme dans la zone de modulation 15, on a tout intérêt à avoir des électrodes de taille légèrement supérieure à celle de la zone de confinement de la lumière.

Le microguide 16a comporte, dans la zone de modulation 15, un élargissement 17. la largeur L′ de cet élargissement varie de 10 à 1000 µm. En dehors de la zone de modulation, ce microguide 16a a une largeur La de 3 à 5 micromètres. La gravure de la couche guidante 14a est réalisée par voie sèche selon le motif voulu, par les procédés classiques de photolithographie.

La structure guide OIS2 se termine par une couche supérieure 18 de confinement en silice non intentionnellement dopée, ou dopée par un dopant diminuant son indice ou encore par un dopant augmentant son indice.

Le dopage de la silice des couches 12, 14a et 18 doit être tel que l'indice de réfraction de la couche guide 14 est supérieur à celui des couches 12 et 18.

Conformément à l'invention, le microguide 16a présente dans la zone de modulation et donc dans son élargissement 17, un évidement 19a longitudinal dont l'axe de symétrie est confondu avec celui de l'axe du microguide 16a. Cet évidement 19a est compris totalement dans l'élargissement 17. La largeur e séparant l'évidement 19a du microguide 16a, dans sa partie la moins large, est favorablement faible et typiquement de l'ordre de 5 à 20 µm. La largeur w de l'évidement guide 16a et varie de 1 à 4 µm.

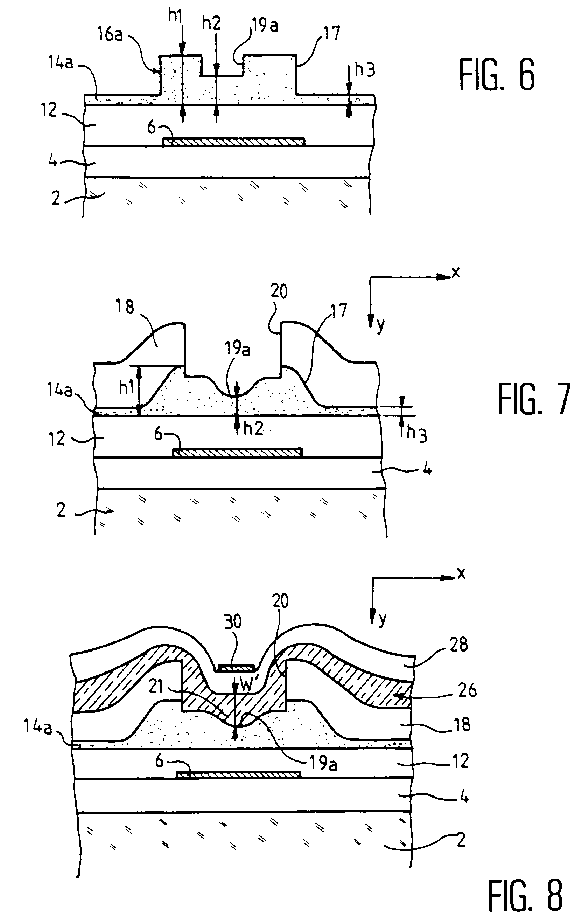

Le profil du motif gravé dans la couche guidante 14a, avant le dépôt de la couche 18, est représenté sur les parties A et B de la figure 5 et sur la figure 6. La partie A de la figure 5 et la figure 6 sont des coupes selon la ligne A-A de la figure 4 et la partie B de la figure 5 est une coupe selon la ligne B-B de la figure 4 qui est voisine du début de l'évidement 17.

L'évidement 19a interrompt le microguide 16a de largeur La dans la zone de modulation 15. Il va permettre de remplacer dans cette zone 15 le microguide passif 16a par un microguide en polymère actif qui va occuper l'évidement 19a.

Si un seul masque photolithographique est utilisé pour réaliser le microguide 16a et l'évidement 19a, il est clair que dans la zone de modulation les hauteurs h₂ et h₃ de la couche 14a sont égales (partie A figure 5).

Cette façon de procéder a l'avantage de réaliser un parfait alignement de l'axe de l'évidement 19a et de celui du microguide 16a.

En revanche, elle limite la liberté d'adaptation du profil du mode guidé dans le microguide 16a de largeur L′ et celui du mode guidé dans le microguide actif en polymère qui va remplir l'évidement 19a (les indices de réfraction de la silice dopée et des polymères sont dans le cas général différents). Il y a donc en général des pertes légères de lumière à la transition.

Avec deux niveaux de masque, un pour la réalisation du microguide 16a et un autre pour la réalisation de l'évidement 19a, on a la liberté de choisir h₂ différent de h₃, comme représenté sur les figures 6, 7 et 8, et donc d'adapter les deux profils de modes. Dans ce cas, h₂ est calculé à partir des paramètres du microguide 16a et surtout de l'indice de réfraction du polymère actif 26 utilisé.

Cependant, l'utilisation de deux niveaux de masque, outre le fait qu'elle complique la technologie, conduit en général à un léger désalignement des axes des microguides 16a et de l'évidement 19a. Il y aura donc également une légère perte de lumière à la transition, mais d'origine différente.

Par ailleurs, h₃ peut être choisi nulle.

Lorsqu'on utilise deux niveaux de masque, h₂ peut, dans certains cas, être choisi négatif (c'est-à-dire que la couche de confinement 12 est légèrement gravée).

Par ailleurs, la hauteur h₂ de la figure 7 n'est pas forcément égale à celle de la figure 5, partie A ou figure 6, car on peut légèrement attaquer la couche 14a lors de la réalisation de la cavité 20.

Pour une différence d'indice de 10⁻², (cas des couches 12 et 18 en SiO₂ non dopée et d'un microguide 16a en SiO₂ fortement dopée), on choisit pour une longueur d'onde de 800 nm, h₁ tel que 0,5 µm<h₁<3 µm.

Pour une différence d'indice de 6.10⁻³ (cas des couches 12 et 18 en SiO₂ non dopée et du microguide en SiO₂ moyennement dopée), et une longueur d'onde de 1,55 um, on choisit h₁ tel que 2 µm<h₁<8 µm.

La hauteur h₂ dépend également du type de confinement désiré, elle peut varier de 0 à 3 µm suivant la valeur de h₁, de la différence d'indice entre la couche guide et les couches adjacentes et de la largeur La du microguide 16a. Pour une différence d'indice de 10⁻², une longueur d'onde de 800 nm, et h₁ valant 2 µm, h₂ peut varier de 0 à 1 µm par exemple.

h₃ est en général peu différent de h₂, donc de l'ordre de 0 à 1 µm pour une différence d'indice de 10⁻² et une longueur d'onde de 800 nm environ.

Le plus souvent h₃ est choisi légérement inférieur à h₂ quand h₃ ≠h₂ car le mode guidé dans la silice est en général moins confiné que le mode guidé dans le guide actif (la différence d'indice dans le guide silice est en général plus faible que celle du guide polymère). Par exemple, avec un matériau actif ayant un indice de 1,55 et une couche 28 d'indice 1,50, h₃ peut varier dans l'exemple donné de 0 à 0,6 µm.

Après gravure de la couche guidante 14a selon le motif de la figure 5 ou 6, on effectue avantageusement un recuit à haute température, afin de faire fluer légèrement la couche guidante et adoucir ainsi les marches gravées, comme représenté sur la figure 7. Ce recuit peut être effectué à 1 200°C en atmosphère d'argon ou d'oxygène.

La couche guidante ainsi recuite est alors recouverte de la couche de confinement supérieure 18 de silice que l'on grave de façon à former la cavité 20. Cette dernière est réalisée en regard de la zone élargie 17 du microguide 16a et constitue avec l'évidement 19a une seule et unique cavité limitée dans les deux directions x et z parallèles au plan des couches et qui va permettre le confinement latéral de la lumière dans le microguide en polymère organique à propriétés électrooptiques, dans la zone centrale 21 du modulateur et en particulier dans l'évidement 19a.

La cavité 20 est pratiquée de sorte que les bords de l'évidement 19a du microguide 16a soient recouverts de silice non dopée 18 (figure 3). L'épaisseur l de silice non dopée sur ces bords n'est pas critique et varie de 0 à 5 µm.

Le dépôt de la couche de polymère solide organique électrooptique 26, puis de la couche de confinement polymérique 28 sur la structure obtenue peuvent alors être réalisés comme décrit précédemment. Le modulateur se termine par la formation de l'électrode supérieure 30 comme décrit précédemment.

La structure finale, en coupe transversale, est celle représentée sur la figure 8.

Dans ce modulateur, la lumière est confinée dans la région centrale 21 du guide polymérique du fait de l'épaisseur W′ de polymère actif, supérieure à celle des régions adjacentes.

La structure du modulateur représenté sur les figures 3, 4 et 8 est beaucoup plus complexe que celle représentée sur les figures 1 et 2, utilisant une structure guide en OIS1. Ceci est dû à la faible différence d'indice (10⁻² ou 10⁻³) entre la couche guidante 14a et les couches de confinement 12 et 18 ainsi qu'aux épaisseurs beaucoup plus fortes mises en jeu dans la structure OIS2.

Il est cependant possible de simplifier la fabrication du modulateur dans la structure OIS2 en utilisant une couche très fine 32 d'un matériau à forte variation d'indice, Si₃N₄, Al₂O₃ ou oxynitrure de silicium, comme représenté sur les figures 9 à 13, sous le polymère organique actif.

Dans ce mode de réalisation, le modulateur de l'invention comporte encore (figure 9), sur le substrat 2, la couche de silice 4, l'électrode inférieure 6 (avec sa zone de contact électrique), la couche de confinement inférieure 12 en silice, puis la couche guidante 14b en silice fortement dopée d'épaisseur h_{b}. Ces couches et électrode sont formées comme décrit précédemment.

On effectue alors une gravure complète ou partielle de la couche guidante 14b selon le motif représenté en vue de dessus sur la figure 10 afin de former le microguide 16b de la structure guide. Lb indique la largeur du microguide 16b. Ce microguide comporte dans la zone de modulation un évidement 19b.

Cet évidement peut être effectué sur tout ou partie de l'épaisseur du microguide 16b, ce qui correspond à une épaisseur ha≥0 (figure 12a).

On effectue alors le dépôt d'une couche mince de nitrure de silicium de 10 à 50 nm ou éventuellement d'alumine ou d'oxynitrure de silicium. Cette couche est déposée par PECVD ou LPCVP ou éventuellement pulvérisation cathodique ou encore évaporation.

On effectue alors une gravure de cette couche de façon à obtenir le motif 32 représenté sur la figure 11a en vue de dessus. Ce motif se présente sous la forme d'une bande dont l'axe longitudinal est confondu avec celui du microguide 16b, cette bande 32 étant logée entièrement dans l'évidement 19b du microguide 16b.

La largeur w" du motif 32 est voisine de la largeur Lb du microguide, mais généralement légèrement inférieure, compte tenu des indices des matériaux choisis et de la volonté de rester monomode. En particulier, w" vaut de 2 à 8 µm.

Le profil obtenu, selon la ligne b-b de la figure 11a, est donné sur la figure 11b.

On recouvre alors l'ensemble de la structure par la couche de confinement supérieure 18 en SiO₂ puis on forme la cavité 20 limitée selon les directions x et z parallèles aux couches en gravant la couche 18 jusqu'à la couche de haut indice 14b ou en s'arrêtant très légèrement au-dessus de la couche de haut indice (par exemple 0,1 µm pour tenir compte des incertitudes de gravure et ne pas attaquer du tout la couche de haut indice).

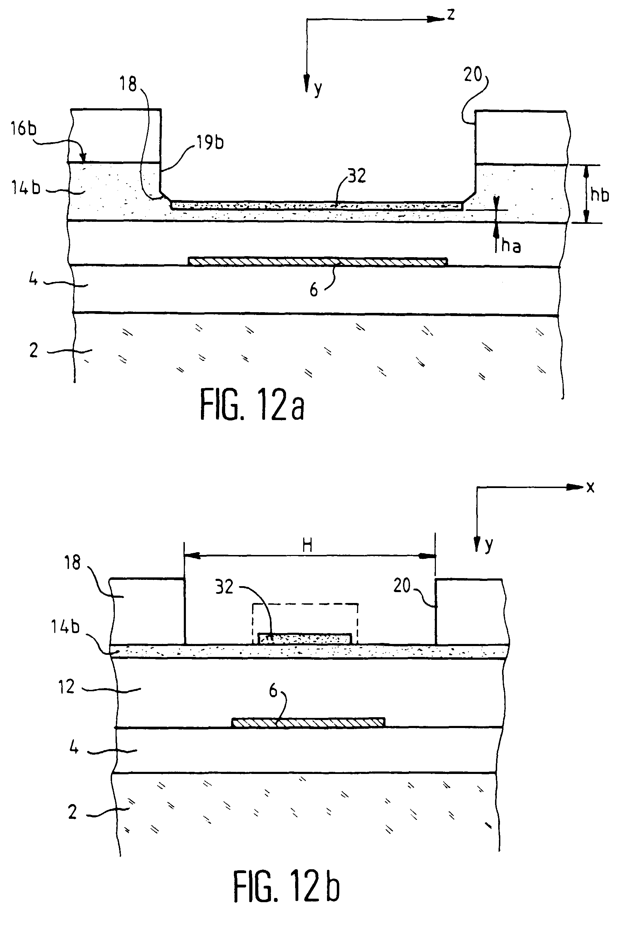

Comme représenté sur les figures 12a et 12b, respectivement en coupe longitudinale et transversale, cette cavité 20 est située en regard de la bande 32 de matériau à haut indice. La largeur H de cette cavité est supérieure à la largeur w" (de l'ordre de 2 à 8 µm) du profil 32 et pour les matériaux choisis, et est comprise entre 20 et 100 µm.

Dans ce mode de réalisation, les bords de l'évidement 19b (figure 12a) ne sont pas recouverts de silice non dopée.

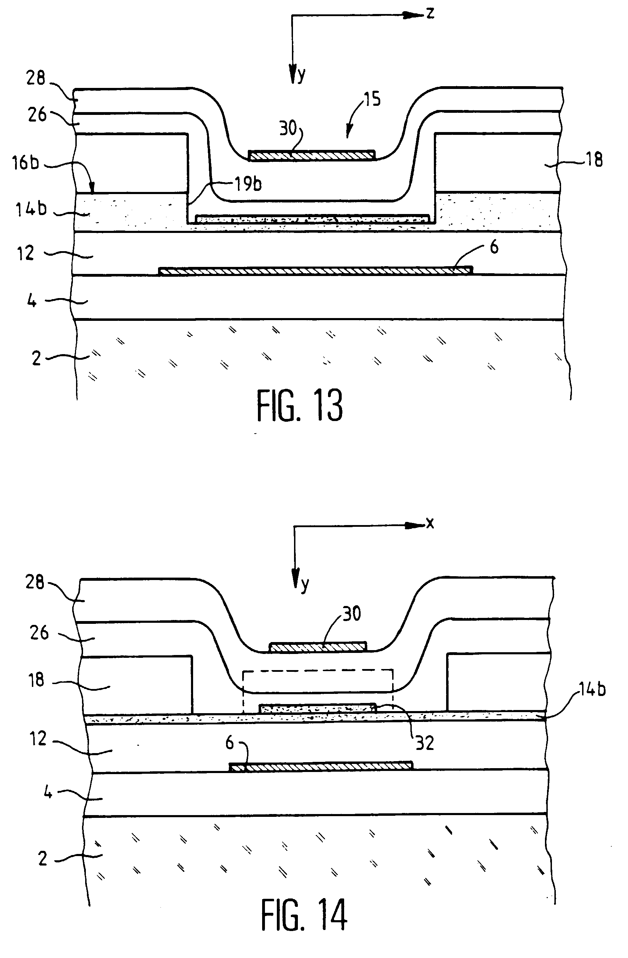

On dépose alors la couche 26 de polymère électrooptique puis la couche 28 de polymère et on forme l'électrode supérieure 30 du modulateur électrooptique. Les figures 13 et 14 montrent la structure finale de ce modulateur, respectivement en coupe longitudinale et en coupe transversale.

L'ordre des opérations de gravure et de dépôt décrites ci-dessus en référence aux figures 9 à 14 peut éventuellement être légèrement différent.

Par exemple :
1°) gravure de la couche guidante 14b comme représenté sur la figure 10),
2°) dépôt de la couche de confinement supérieure 18 en SiO₂,
3°) gravure de cette couche 18 pour former la cavité 20,
4°) dépôt de la couche de haut indice en nitrure de silicium ou SiOₓN_{y} ou alumine,
5°) gravure de cette couche pour obtenir le motif 32.

Les autres opérations sont identiques à celles décrites précédemment et la structure finale est similaire à celle représentée sur les figures 13 et 14.

## Revendications

1. Modulateur électrooptique intégré sur un substrat comportant :
a) une structure guide supportée par le substrat (2), comprenant une couche guidante (14, 14a, 14b) pour former un microguide (16, 16a, 16b) apte à véhiculer des faisceaux lumineux, interposée entre une couche inférieure (12) et une couche supérieure (18) d'indices de réfraction inférieurs à celui de la couche guidante, la couche guidante et/ou la couche supérieure étant gravée pour le confinement latéral des faisceaux lumineux dans le microguide,
b) une cavité (19, 19a, 19b) pratiquée sur tout ou partie de l'épaisseur au moins de la couche supérieure et sur une partie seulement de la longueur de la structure guide,
c) un matériau solide actif (26) dont on peut modifier électriquement l'indice de réfraction, remplissant ladite cavité et capable de véhiculer lesdits faisceaux lumineux,
d) une couche de confinement (28) recouvrant le matériau actif ainsi que la structure guide, les indices de réfraction respectivement de la couche supérieure et de la couche de confinement étant inférieurs à celui du matériau actif,
e) deux électrodes (6, 30) placées de part et d'autre du matériau actif pour modifier son indice, une électrode inférieure située au-dessus de la couche inférieure du côté du substrat et une électrode supérieure disposée sur la face externe de la couche de confinement.

2. Modulateur selon la revendication 1, caractérisé en ce que la cavité (20) est pratiquée sur toute l'épaisseur de la couche supérieure et sur une partie au moins de la couche guidante.

3. Modulateur selon la revendication 1 ou 2, caractérisé en ce qu'une couche tampon (4) est prévue entre l'électrode inférieure et le substrat.

4. Modulateur selon l'une quelconque des revendications 1 à 3, caractérisé en ce que le matériau actif est un polymère organique.

5. Modulateur selon l'une quelconque des revendications 1 à 4, caractérisé en ce que deux transitions (22, 24) adiabatiques sont prévues entre la cavité contenant le matériau actif et le microguide.

6. Modulateur selon l'une quelconque des revendications 1 à 4, caractérisé en ce que le microguide (16a) comporte en regard de la cavité un élargissement (17).

7. Modulateur selon l'une quelconque des revendications 1 à 6, caractérisé en ce que la couche de confinement (28) est en polymère organique solide.

8. Modulateur selon l'une quelconque des revendications 1 à 7, caractérisé en ce que le substrat et les couches supérieure et inférieure sont en matériaux inorganiques.

9. Modulateur selon l'une quelconque des revendications 1 à 8, caractérisé en ce que le substrat est en silicium, la couche supérieure (18) et la couche inférieure (12) sont en silice non intentionnellement dopée ou éventuellement dopée avec des dopants diminuant ou augmentant leur indice de réfraction, et en ce que la couche guidante (14, 14a, 14b) est en nitrure de silicium, en alumine, en oxynitrure de silicium SiOₓN_{y} avec 0≤x≤2 et 0≤y≤4/3 ou en silice non intentionnellement dopée ou dopée avec des dopants augmentant ou diminuant son indice de réfraction.

10. Modulateur selon l'une quelconque des revendications 1 à 9, caractérisé en ce que le matériau actif présente dans sa partie centrale (21) une épaisseur (w′) supérieure à celle de ses parties adjacentes.

11. Modulateur selon l'une quelconque des revendications 1 à 10, caractérisé en ce qu'un matériau complémentaire (32) est prévu entre le matériau actif et le fond de la cavité, ce matériau présentant un indice de réfraction supérieur à ceux respectivement de la couche guidante et du matériau actif.

12. Modulateur selon la revendication 11, caractérisé en ce que le matériau complémentaire est en nitrure de silicium, en oxynitrure de silicium ou en alumine, pour une couche guidante réalisée à partir de silice.

13. Modulateur selon l'une quelconque des revendications précédentes, caractérisé en ce que la structure guide étant monomode, la couche guidante présente en fond de cavité une épaisseur telle que la structure guide reste monomode suivant une première direction perpendiculaire aux couches et une seconde direction parallèle au plan des couches.

14. Procédé de fabrication d'un modulateur selon l'une quelconque des revendications 1 à 13, caractérisé en ce qu'il comprend les étapes suivantes :
A) réalisation de l'électrode inférieure (6) au-dessous de la couche inférieure (12) côté substrat,
B) dépôts successifs de la couche inférieure (12), de la couche guidante (14, 14a, 14b) et de la couche supérieure (18),
C) gravure de la couche guidante et/ou de la couche supérieure pour former au moins le microguide (16, 16a, 16b),
D) gravure de la couche supérieure pour former au moins en partie la cavité (20),
E) dépôts successifs du matériau actif (26) et de la couche de confinement (28) sur l'ensemble de la structure obtenue en D,
F) réalisation de l'électrode supérieure (30) en face de la cavité.

15. Procédé selon la revendication 14, caractérisé en ce que l'on grave la couche guidante pour former, en face de l'électrode inférieure, un évidement (19, 19a, 19b) constituant une partie de ladite cavité.

16. Procédé selon la revendication 14 ou 15, caractérisé en ce que l'on dépose une couche tampon (4) sur le substrat avant de réaliser l'électrode inférieure.

17. Procédé selon l'une quelconque des revendications 14 à 16, caractérisé en ce que l'on dépose un matériau complémentaire dans la partie inférieure de la cavité avant d'effectuer l'étape D, ce matériau présentant un indice de réfraction supérieur à ceux respectivement de la couche guidante et du matériau actif.

## Patentansprüche

1. Auf einem Substrat integrierter elektro-optischer Modulator, umfassend:
a) eine Leiterstruktur, getragen von dem Substrat (2), umfassend eine leitende Schicht (14, 14a, 14b) zur Bildung eines Mikroleiters (16, 16a, 16b), befähigt zum Leiten von Lichtstrahlen, eingefügt zwischen eine Unterschicht (12) und eine Oberschicht (18) mit kleineren Brechungsindizes als dem der leitenden Schicht, wobei die leitende Schicht und/oder die Oberschicht geätzt wird zur seitlichen Einschließung der Lichtstrahlen in dem Mikroleiter,
b) eine Vertiefung (19, 19a, 19b), hergestellt über die ganze Dicke oder einen Teil der Dicke von wenigstens der Oberschicht und nur über einen Teil der Länge der Leiterstruktur,
c) ein aktives festes Material (26), dessen Brechungsindex man elektrisch verändern kann und das die Vertiefung auffüllt und fähig ist, besagte Lichtstrahlen zu leiten,
d) eine Einschließungsschicht (28), die das aktive Material sowie die Leiterstruktur bedeckt, wobei die jeweiligen Brechungsindizes der Oberschicht und der Einschließungsschicht kleiner sind als der des aktiven Materials,
e) zwei Elektroden (6, 30), zu beiden Seiten des aktiven Materials angeordnet, um seinen Index zu verändern, wobei eine untere Elektrode in Substratnähe unterhalb der Unterschicht angeordnet ist und eine obere Elektrode auf der Außenfläche der Einschließungsschicht.

2. Modulator nach Anspruch 1, dadurch gekennzeichnet, daß die Vertiefung (20) über die ganze Dicke der Oberschicht hergestellt wird und über wenigstens einen Teil der leitenden Schicht.

3. Modulator nach Anspruch 1 oder 2, dadurch gekennzeichnet, daß eine Pufferschicht (4) vorgesehen ist zwischen der unteren Elektrode und dem Substrat.

4. Modulator nach einem der Ansprüche 1 bis 3, dadurch gekennzeichnet, daß das aktive Material ein organisches Polymer ist.

5. Modulator nach einem der Ansprüche 1 bis 4, dadurch gekennzeichnet, daß die beiden adiabatischen Übergänge (22, 24) vorgesehen sind zwischen der das aktive Material enthaltenden Vertiefung und dem Mikroleiter.

6. Modulator nach einem der Ansprüche 1 bis 4, dadurch gekennzeichnet, daß der Mikroleiter (16a) der Vertiefung gegenüberstehend eine Verbreiterung (17) umfaßt.

7. Modulator nach einem der Ansprüche 1 bis 6, dadurch gekennzeichnet, daß die Einschließungsschicht (28) ein festes organisches Polymerisat ist.

8. Modulator nach einem der Ansprüche 1 bis 7, dadurch gekennzeichnet, daß das Substrat und die Ober- und Unterschicht aus anorganischem Material sind.

9. Modulator nach einem der Ansprüche 1 bis 8, dadurch gekennzeichnet, daß das Substrat aus Silicium ist und die Oberschicht (18) und die Unterschicht (12) aus Siliciumdioxid sind, nicht-absichtlich dotiert oder eventuell mit Dotierstoffen dotiert, die ihren Brechungsindex verkleinern oder vergrößern, und dadurch, daß die leitende Schicht (14, 14a, 14b) aus Siliciumnitrid, aus Aluminiumoxid, aus Siliciumoxinitrid SiOₓN_{y} mit 0≤x≤2 und 0≤y≤4/3 ist oder aus Siliciumdioxid, nicht-absichtlich dotiert oder mit Dotierstoffen dotiert, die ihren Brechungsindex verkleinern oder vergrößern.

10. Modulator nach einem der Ansprüche 1 bis 9, dadurch gekennzeichnet, daß das aktive Material in seinem zentralen Teil (21) eine großere Dicke (w') als seine benachbarten Teile aufweist.

11. Modulator nach einem der Ansprüche 1 bis 10, dadurch gekennzeichnet, daß ein komplementäres Material (32) vorgesehen ist zwischen dem aktiven Material und dem tiefesten Teil der Vertiefung, wobei dieses Material einen hoheren Brechungsindex aufweist als jeweils die leitende Schicht und das aktive Material.

12. Modulator nach Anspruch 11, dadurch gekennzeichnet, daß das komplementäre Material fur eine aus Siliciumdioxid hergestellte leitende Schicht aus Siliciumnitrid, aus Siliciumoxinitrid oder aus Aluminiumoxid ist.

13. Modulator nach einem der vorangehenden Ansprüche, dadurch gekennzeichnet, wobei die Leiterstruktur eine Eintypen-Struktur ist, daß die leitende Schicht im tiefsten Teil der Vertiefung eine solche Dicke aufweist, daß die Leiterstruktur eine Eintypen-Struktur bleibt in einer ersten, zu den Schichten senkrechten Richtung und einer zweiten, zu der Ebene der Schichten parallelen Richtung.

14. Herstellungsverfahren eines Modulators nach einem der Ansprüche 1 bis 13, dadurch gekennzeichnet, daß es die folgenden Schritte umfaßt:
A) Erzeugen der unteren Elektrode (6) unterhalb der Unterschicht (12) in Substratnähe,
B) aufeinanderfolgende Abscheidungen der Unterschicht (12), der leitenden Schicht (14, 14a, 14b) und der Oberschicht (18),
C) Ätzen der leitenden Schicht und/oder der Oberschicht, um wenigstens den Mikroleiter (16, 16a, 16b) zu bilden.
D) Ätzen der Oberschicht, um die Vertiefung (20) wenigstens teilweise zu bilden,
E) aufeinanderfolgende Abscheidungen des aktiven Materials (26) und der Einschließungsschicht (28) auf der Gesamtheit der in D erhaltenen Struktur,
F) Erzeugen der oberen Elektrode (30) gegenüber der Vertiefung.

15. Verfahren nach Anspruch 14, dadurch gekennzeichnet, daß man die leitenden Schicht atzt, um der unteren Elektrode gegenüber eine Vertiefung (19, 19a, 19b) zu formen, die einen Teil der genannten Vertiefung bildet.

16. Verfahren nach Anspruch 14 oder 15, dadurch gekennzeichnet, daß man vor dem Erzeugen der unteren Elektrode eine Pufferschicht (4) auf dem Substrat abscheidet.

17. Verfahren nach einem der Ansprüche 14 bis 16, dadurch gekennzeichnet, daß man in dem unteren Teil der Vertiefung ein komplementäres Material abscheidet, ehe man den Schritt D ausführt, wobei dieses Material einen höheren Brechungsindex aufweist als die leitende Schicht und das aktive Material.

## Claims

1. Electrooptic modulator integrated on a substrate comprising:
a) a guide structure supported by the substrate (2) and having a guiding layer (14, 14a, 14b) for forming a microguide (16, 16a, 16b) able to carry the light beams, interposed between a lower layer (12) and an upper layer (18) having refractive indices below that of the guiding layer, the guiding layer and/or the upper layer being etched for the lateral confinement of the light beams in the microguide,
b) a cavity (19, 19a, 19b) made over all or part of the thickness of at least the upper layer and on part only of the length of the guide structure,
c) an active solid material (26), whereof it is possible to electrically modify the refractive index, which fills the said cavity and is able to carry said light beams,
d) a confinement layer (28) covering the active material and the solid structure, the refractive indices respectively of the upper layer and the confinement layer being lower than that of the active material,
e) two electrodes (6, 30) placed on either side of the active material for modifying its index, a lower electrode placed above the lower layer on the side of the substrate and an upper electrode placed on the outer face of the confinement layer.

2. Modulator according to claim 1, characterized in that the cavity (20) is made over the entire thickness of the upper layer and on at least part of the guiding layer.

3. Modulator according to claim 1 or 2, characterized in that a buffer layer (4) is provided between the lower electrode and the substrate.

4. Modulator according to any one of the claims 1 to 3, characterized in that the active material is an organic polymer.

5. Modulator according to any one of the claims 1 to 4, characterized in that two adiabatic transitions (22, 24) are provided between the cavity containing the active material and the microguide.

6. Modulator according to any one of the claims 1 to 4, characterized in that the microguide (16a) has a widening (17) in front of the cavity.

7. Modulator according to any one of the claims 1 to 6, characterized in that the confinement layer (28) is of solid organic polymer.

8. Modulator according to any one of the claims 1 to 7, characterized in that the substrate and upper and lower layers are made from inorganic materials.

9. Modulator according to any one of the claims 1 to 8, characterized in that the substrate is made from silicon, the upper layer (18) and the lower layer (12) are made from silica which is not intentionally doped or is possibly doped with doping agents increasing or decreasing their refractive index and in that the guiding layer (14, 14a, 14b) is of silicon nitride, alumina, silicon oxynitride SiOₓN_{y} with 0 ≤ x ≤ 2 and 0 ≤ y ≤ 4/3 or silica not intentionally doped or doped with doping agents increasing or decreasing its refractive index.

10. Modulator according to any one of the claims 1 to 9, characterized in that the active material present in its central part (21) has a thickness (w') greater than that of its adjacent parts.

11. Modulator according to any one of the claims 1 to 10, characterized in that a complementary material (32) is provided between the active material and the bottom of the cavity, said material having a refractive index higher than those respectively of the guiding layer and the active material.

12. Modulator according to claim 11, characterized in that the complementary material is siliconnitride, silicon oxynitride or alumina, for a guiding layer made from silica.

13. Modulator according to any one of the preceding claims, characterized in that as the guiding structure is monomodal, the guiding layer has a cavity bottom with a thickness such that the guide structure remains monomodal according to a first direction perpendicular to the layers and a second direction parallel to the plane of the layers.

14. Process for the production of a modulator according to any one of the claims 1 to 3, characterized in that it comprises the following stages:
A) producing the lower electrode (6) below the lower layer (12) on the substrate side.
B) successive depositions of the lower layer (12), the guiding layer (14, 14a, 14b) and the upper layer (18).
C) etching the guiding layer and/or the upper layer to at least form the microguide (16, 16a, 16b).
D) etching the upper layer to at least partly form the cavity (20).
E) successive depositions of the active material (26) and the confinement layer (28) on the complete structure obtained in D).
F) producing the upper electrode (30) in front of the cavity.

15. Process according to claim 14, characterized in that the guiding layer is etched to form, in front of the lower electrode, a recess (19, 19a, 19b) constituting part of said cavity.

16. Process according to claim 14 or 15, characterized in that a buffer layer (4) is deposited on the substrate before producing the lower electrode.

17. Process according to any one of the claims 14 to 16, characterized in that a complementary material is deposited in the lower part of the cavity before carrying out stage D, said material having a refractive index higher than those of the guiding layer and the active material.
